# EUROPEAN PATENT APPLICATION

(11) **EP 1 462 903 A2**
(43) Date of publication of application: **29.09.2004**
(21) Application number: 04445029.4
(22) Date of filing: 12.03.2004
(51) Int. Cl.: G05D 23/19

(54) **System and method for data handling**

(30) Priority: 12.03.2003 SE 0300678
(71) Applicant: Thermia Värme AB, 671 29 Arvika (SE)
(72) Inventor: Olsson, Patrik, 671 32 Arvika (SE)
(74) Representative: Janson, Ronny

(57) **Abstract**

System for handling operation status data of at least one cooling and/or heating system (1,2), which comprise means for communication (17,18) via a communications system. The system comprises server means (30) arranged for communication with said cooling and/or heating system (1,2) via the communication system, and for communicating operation status data of said cooling and/or heating systems with said cooling and/or heating systems. The system is further arranged such that cooling and/or heating system software may be replaced via the server means (30).

## Description

### Field of the invention

The present invention relates to cooling and/or heating systems, and in particular to a system for handling operation status data of cooling and/or heating systems according to the preamble of claim 1.

The present invention also relates to a server means for handling operation status data of cooling and/or heating systems according to the preamble of claim 13.

The present invention also relates to a method for handling operation status data of cooling and/or heating systems according to the preamble of claim 14.

The present invention further relates to a system for handling software of cooling and/or heating systems according to the preamble of claim 17.

The present invention also relates to a server means for handling software of cooling and/or heating systems according to the preamble of claim 18.

### Background of the invention

Today, there is a large number of heating systems for heating living houses, apartment buildings and office buildings.

These heating systems may consist of e.g. oilfired boilers, bioenergy boilers, which e.g. are intended for firing with chips or pellets, and heat pumps.

Heating systems of today, in particular heat pumps of various kinds, are often provided with an internal control equipment. By way of the control equipment, an installation engineer may set heat pump operation parameters. Further, the control equipment may be used to set a desired room temperature and to adapt heat functions so that the house owner always obtains a desired indoor temperature irrespective of the outdoor temperature. The control equipment may also present current operation information, store operation history for subsequent fault analysis, and monitor various functions in the heat pump to give an alarm if a fault arises.

A problem with current heating systems is that when the owner of the heating system and/or the maintenance responsible person is informed about a fault in the heating system, a maintenance person must be contacted and who then must visit the heating system to check the cause of failure.

Another problem with the solution of today is that minor faults, which in time may cause severe damages, usually are not detected until it is too late.

Yet another problem with the presently used heat pumps is that when a heat pump manufacturer releases a new software version for the heat pump control computer, the whole control computer often has to be replaced.

### Summary of the invention

The object of the present invention is to provide a system for handling operation status data of cooling and/or heating systems that solves the above mentioned problems.

This object is achieved by a system according to the characterizing portion of claim 1.

It is a further object of the present invention to provide a server means for handling operation status data of cooling and/or heating systems that solves the above mentioned problems.

This object is achieved by a server means according to the characterizing portion of claim 13.

Another object of the present invention is to provide a method for handling operation status data of cooling and/or heating systems that solves the above mentioned problems.

This object is achieved by a method according to the characterizing portion of claim 14.

Another object of the present invention is to provide a system for handling software of cooling and/or heating systems that solves the above mentioned problems.

This object is achieved by a system according to the characterizing portion of claim 17.

Another object of the present invention is to provide a server means for handling software of cooling and/or heating systems that solves the above mentioned problems.

This object is achieved by a server means according to the characterizing portion of claim 18.

The system comprises server means arranged for communication with at least one cooling and/or heating system via a communication system, and for communicating operation status data of said cooling and/or heating systems with said cooling and/or heating systems. The system is further arranged such that cooling and/or heating system software may be replaced via the server means.

This has the advantage that the present invention may be used to replace software in the control computers of heat pumps without physically having to visit the heat pumps.

This further has the advantage that a centrally located server means may exchange data with at least one cooling and/or heating system, e.g. a heat pump manufacturer may have a server means in communication with a plurality or all of the heat pumps sold by the heat pump manufacturer.

This further allows that the heat pump manufacturer or its maintenance organisation continuously may receive operation data and operation statistics from the installed appliances. The heat pump manufacturer may then use these operation statistics as a tool when further developing existing products and when developing new products.

Further, the maintenance organisation may continuously receive information regarding faults that have occurred in the cooling and/or heating appliances, and quickly take action to take care of the faults.

The maintenance organisation may also use the operation statistics to determine, from a operation history, if it is time to replace materials of consumption before the material actually wears out or breaks down. This allows that a degradation of the performance of the cooling and/or heating system may be detected at an early stage, which thereby allows a quick action to get the appliance working optimally again while at the same time severe appliance damages are avoided.

The means for communication of said cooling and/or heating system may consist of module that is connected to, or integrated in, the cooling and/or heating system. The module may consist of e.g., a GSM module, a GPRS module, a UMTS module, a modem or an Ethernet module.

This has the advantage that the connection between the cooling and/or heating systems may be established in a plurality of ways, and that the connection may be established with the technology at present being considered as most suitable. The use of a standardised data communication method allows an inexpensive and simple implementation of the communication between the server means and the cooling and/or heating systems.

The server means may comprise means for converting data received from said cooling and/or heating systems to a format which is suitable for presentation for a user by means of a general purpose program. The format may advantageously be intended for presentation by means of a HTML (Hyper Text Markup Language) page or and XML (Extensible Markup Language) page. The general purpose program may in this case advantageously consist of a web browser.

This allows that the information from the cooling and/or heating systems may be made available by means of an Internet page, which in turn has the advantage that all possessors of a cooling and/or heating system connected to the system may get access to operation status of "his" appliance, no matter of the location of the possessor. All that is needed is an Internet connection.

The system may be arranged to present data to the user graphically. This has the advantage that information may be presented to the user in form of a representation of the user's system, whereupon the user may "click" on the system parameter he wishes to change.

The cooling and/or heating systems, or alternatively the means for communication, may comprise means for converting data intended for transmission from the cooling and/or heating system to a format which is suitable for presentation for a user by means of a general purpose program.

This has the advantage that data may be transferred in a format that immediately may be shown/linked into an Internet page.

The system may be arranged to authenticate the user prior to presenting data to the user. This has the advantage that presentation of erroneous data to the wrong user is avoided. Further, the possibility that a user accidentally changes settings for other appliance than his own is avoided. This further allows that data may be presented in a plurality of levels, i.e., the owner of an appliance may get access to a certain amount of information while a maintenance person may get access to all available information.

The server means may be arranged to receive data from the cooling and/or heating systems continuously, at regular intervals, at initiation by the server means or the cooling and/or heating systems, and/or when a property differs from a given interval or is below or exceeds a certain value.

This allows that the owner/manufacturer/maintenance responsible person may have access to current operation status information and alarm information at all times.

The server means may be arranged to transmit data to at least one cooling and/or heating system. This has the advantage that settings such as set points of room and water temperatures may be transferred to the cooling and/or heating system. Further, operation parameters may be transferred, e.g. to perform corrections that remedies faults that have occurred, which in turn has the advantage that faults may be corrected without maintenance personnel physically having to visit the appliance.

The server means may be arranged to receive operation status data from a user of at least one cooling and/or heating system, and to communicate these data to the at least one cooling and/or heating systems. This has the advantage that a user/owner of the cooling and/or heating system may give set points of e.g. room temperatures, which the server means then transfers to the cooling and/or heating system. Further, a maintenance responsible person may enter operation parameters or other data that the server means then transfers to the cooling and/or heating system.

The operation status data may consist of one or more from the group: one or more event logs, temperatures, set points, current consumption, error information, filter status information, heat functions, alarms.

This has the advantage that any data relating to the operation of the cooling and/or heating system may be transferred to the server means.

### Brief description of the drawings

The invention will now be described in connection with exemplary embodiments and with reference to the attached drawings, in which:
Fig. 1 shows an example of a system according to the present invention.
Fig. 2 shows an example of a graphical interface for a user according to a preferred embodiment of the present invention.
Fig. 3 shows another example of a graphical interface for presentation to a user according to a preferred embodiment of the present invention.

### Detailed description of preferred embodiments of the invention

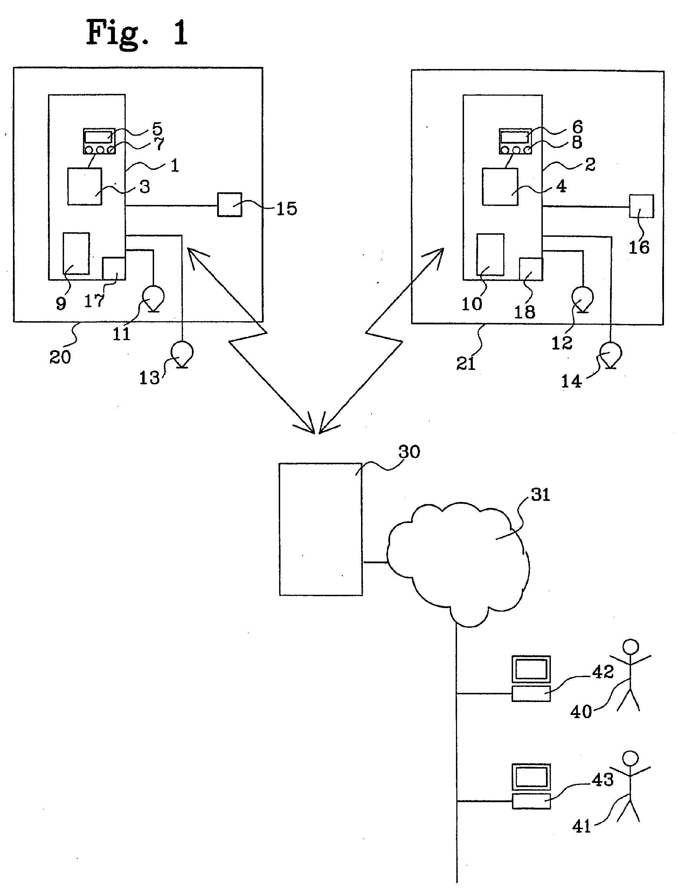

In fig. 1 is shown a preferred embodiment of the present invention. The figure shows two heat pumps 1, 2 installed in a real estate 20 and 21, respectively. The heat pumps are each provided with a control computer 3 and 4, respectively, which controls and monitors various functions in the heat pump. Such functions may e.g. be setting and/or monitoring operating temperatures of a compressor 9, 10, indoor and outdoor temperatures, heating function settings, room temperature control depending on time-of-day or during holiday absence etc.

A user may communicate with the control computers 3, 4 via displays 5, 6 and keypads 7, 8 arranged on the heat pumps.

Further, various sensors and devices may be connected to the control computers 3, 4, such as room sensors 11, 12, outdoor temperature sensors 13, 14 and/or underfloor heating system/radiator system control units 15, 16.

This far the heat pumps 1, 2 are conventional heat pumps where a user makes his settings via the display and keypad on the heat pump. When a fault occurs in such a heat pump, an alarm is generated and shown on the display. When the user then discovers the alarm, he makes contact with a maintenance responsible person who visits the appliance to search the cause of the fault. This is both time consuming and expensive. Further, it is required that the maintenance person carries a substantial set of spare parts to be sure to be able to take care of the fault.

Further, heat pumps of the above mentioned kind has the disadvantage that if they break during e.g. a winter vacation the owner may return to a frozen house.

The present invention solves these problems by means of a system according to the following:

Communication units 17, 18 are also connected to the control computers 3, 4. These communication units comprise means for communicating with the surroundings via General Packet Radio Service (GPRS).

GPRS is a system which allows Internet Protocol (IP) communication in a GSM communication network. In GPRS, the information is transferred packet switched and a communication channel is only utilised when there is data to transmit. GPRS allows the possibility of permanent connection to a mobile communications network without blocking a communication channel for other users. Further, GPRS allows that in spite of the permanent connection, the communication is only charged for actually used communication time and for the transferred data. The use of GPRS has the advantage that even though the communication units are permanently connected to a mobile communications network, the data transmission cost may be kept low since only the capacity actually used needs to be paid for. This may be important when it is a maintenance organisation that pays for all communication costs in a system with a plurality of connected heat pumps.

In fig. 1, the communication units 17, 18 are arranged for communication with a server means 30. The server means 30 is localised at the heat pump 1, 2 manufacturer or alternatively, e.g. at a maintenance company that is responsible for operation and maintenance of the heat pumps. In fig. 1, two heat pumps are arranged for communication with the server means. This number may, however, be only one or an arbitrary number.

The communication units take care of operation status data communication between the heat pump and the server means 30. Operation status data that is transferred to the server means may consist of, e.g. event logs, temperatures, set points, current consumption, fault information, filter status information, heat functions, alarms.

When the server means receives data from a heat pump, these data are converted to a format which is suitable for presentation via a web page, such as an HTML page or an XML page. The server means further comprises an Internet connection to the Internet 31. The web publication may alternatively be carried out by a separate web server connected to the server means 30.

The conversion of data to a format suitable for the web may also be performed in the communication units, or alternatively in the control computers, depending on what is most suitable during implementation.

The received data may be stored in the server means so that there are data stored in the server means for a long way back in time for each heat pump. This history may be very valuable for subsequent fault tracing. Data storage in the server means further has the advantage that storage in the heat pump is unnecessary, which may be economically advantageous since it is much less expensive to store data centrally in a server means than to store heat pump data individually in each heat pump, where it often is a time limit for how long back in time data are stored.

A user/owner 40, 41 of one of the heat pumps 1, 2 that are in communication with the server means 30 may then by means of a web browser or a computer 42, 43 connected to the Internet 31 enter the Uniform Resource Locator (URL) or web address of the server means to get access to information of "his" own appliance. When the user enters the web address of the server means he may at first be presented a login window in which he may enter e.g. an appliance number, a user name and/or a password to get access to information regarding his heat pump. The user login requirement gives a certainty in the system against a user accidentally changing settings of somebody else's heat pump.

The information may be presented as a table with a quantity in one column and its current/set value in the other column. In TABLE 1 is shown an example of information that can be presented on the web page.

**TABLE 1**

| | |
|---|---|
| Outdoor temperature | -8 |
| Room temperature | 20 |
| Set point room temperature | 21 |
| Supply line temperature | 33 |
| Hot Water | 53 |
| Current in main group | |
| Energy balance in ° / min | |
| Alarm | |
| Operation mode | Normal |
| Heat function | 1 |
| Function min | |
| Function max | |
| Break function +5 | |
| Break function 0 | |
| Break function -5 | |
| Heat stop | |
| Lowering, room sensor | 3 |
| Hot Water start temperature | 35 |
| Time HW | 2 |
| Time RAD | 2 |
| Interval TOP heat in days | 2 |
| Stop temp TS TOP heat | 65 |
| Heat pump Start value energy | |
| balance | |
| Max return | |
| Interval between starts HP | |
| Min brine temp | |
| Shunt temp at cooling operation | |
| Additional Start value energy | |
| balance | |

The above table merely constitutes an example of parameters that it is possible to read/set. It is to be understood that the above table may comprise all present parameters in a cooling and/or heating system.

The present invention thus allows that a user may control his heat pump appliance no matter of in which part of the world he is, along as he has access to a computer and Internet connection possibilities.

The table may have different appearances for different users, the heat pump owner may e.g. only have access to a portion of the heat pump functions, parameters such as room temperature and heat function setting, while the manufacturer and/or a maintenance responsible person may have access to all parameters. The manufacturer/ maintenance responsible person may have access to the same functionality as the display/keypad offers at the heat pump location.

For those parameters that not only are readable via the web page but also are controllable, the table may be designed e.g. such that the "value" column is writeable for parameters that can be influenced from the web page.

The GPRS connection between the server means and the heat pumps may be used to transfer data from the heat pumps to the server means continuously, at regular intervals, at initiation by either the server means or a heat pump, and/or when a parameter differs from a given interval or is below/exceeds a certain value, e.g. when an alarm event occurs.

This continuous/regular transfer of heat pump data allows that the heat pump manufacturer continuously may collect operation statistics from the installed appliance, which then may be used to localise construction weaknesses and long time effects on various components in the system. This new information may then be used in/at further development/enhancement/development of existing and new products.

One of the greater advantages of the present invention is that a maintenance organisation may have access to the information in the server means 30. This allows that the maintenance organisation centrally may monitor all heat pumps connected to the system. When an alarm event occurs in a heat pump 1, 2 connected to the server means 30, the alarm is sent to the server means via the GPRS interface so that the maintenance organisation thereby immediately gets knowledge of the alarm and at once may begin fault tracing from the maintenance organisation location.
Since the maintenance organisation may access all data of the heat pump control computer via the web page, and look at the operation history stored in the server means 30, the maintenance organisation may in many cases determine what is wrong remotely and, if possible, take care of the problem remotely by resetting operation parameters in the heat pump via the server means 30, at best without the owner having knowledge of the occurred fault.

Alternatively, if anything physical has broken, a maintenance person may visit the heat pump with correct spare part and knowledge of what is wrong, which makes heat pump maintenance and maintenance cost considerable more effective.

The operation data stored in the server means may also be used for more refined fault tracing. If e.g. a plurality of heat pumps have experienced the same problem/breakdown, the stored data may be used find out which circumstances that caused the breakdown. The stored data may e.g. be used to find out that the cause of the fault was the combination of a component in the heat pump having a high temperature at the same time as another component worked with heavy load at the same time as the outdoor temperature was low.

This fault tracing method may be used to further develop the heat pump so that the same problem will not arise in new products.

The maintenance organisation may also use the information in the server means 30 to determine from the operation history if it is time to replace materials of consumption before the material actually wears out/breaks down. Situations where a heat pump works ineffective due to worn materials may thus be avoided.

A problem with the presently used heat pumps is that when a heat pump manufacturer releases a new software version for the heat pump control computer, this software has to be hand carried to the heat pump if an update of the control computer software is desired, if possible at all. The only way of performing a control computer software update ,and get the heat pump working with the new software, may be to replace the entire control computer.

The present invention has the advantage that it may be used to replace software in the control computers of the heat pumps. If e.g. a manufacturer further develops the software of a heat pump so that the heat pump will work more efficient with the new software, the invention may be used to replace the old software in the heat pump with the new software without physically having to visit the heat pump.

In order to communicate the replacement software from the server means to the heat pump, the server means and the heat pump may e.g. include means for file transfer according to the commonly known FTP protocol (File Transfer Protocol). When a heat pump manufacturer wishes to replace the software of one or more heat pumps, he may from a remote location enter a web page on the server means, and via the web page enter a software upload page. On the software upload page, he may enter the address of the heat pump he wishes to replace software in and also state the computer file that contains the new software. He may then e.g. click on an "OK" button to start the file transfer. Instead of entering just one heat pump address, the manufacturer may enter addresses of all heat pumps that he wants to replace software in, so that the software is transferred to all heat pumps substantially simultaneously. In this way, a heat pump manufacturer may thus supply new software to a plurality or all heat pumps that are connected to the system in a simple and cost and time saving way.

In one embodiment, the new software overwrites the old software so that the heat pump at once starts to work with the new software. The software uploaded to the heat pump may, however, at first be stored in a dedicated location in the memory of the heat pump control computer, so that the actual replacement can be initiated at a later time. This enables that new software in a first step may be provided to a plurality or all heat pumps connected to the server means without being activated, whereupon the software at first may be replaced in e.g. one or a few heat pumps by remote initiation, so that it can be verified via remote monitoring that the heat pumps work properly with the new software, and then remotely initiate software replacement in the rest of the heat pumps provided with the new software.

If the manufacturer/maintenance organisation discovers that a heat pump may operate better, e.g. with a higher efficiency, with a new operation parameter setting of the existing software, the manufacturer/maintenance organisation may use the invention to remotely set system parameters so that the heat pump then will work with the higher efficiency.

The invention may further be used to make various maintenance agreements, e.g. a maintenance agreement where it is guaranteed that original/offered performances are kept. By continuously reading operation data, a manufacturer/maintenance organisation may monitor heat pumps for which a maintenance agreement have been made, and remotely adjust settings when necessary so that the heat pump at all times comply with offered performances.

The manufacturer may as a "customer bonus" also use the invention to periodically, e.g. once a week or once a month, read operation data of the heat pumps and make calculations on how much energy costs each heat pump has saved. This information may then be sent to the customer in form of a post card or Christmas card.

The technology further allows that a maintenance technician travelling around may receive an alarm from a heat pump via SMS or e-mail. The maintenance technician may then as previously mentioned perform fault tracing via the Internet and if possible take care of the problem.

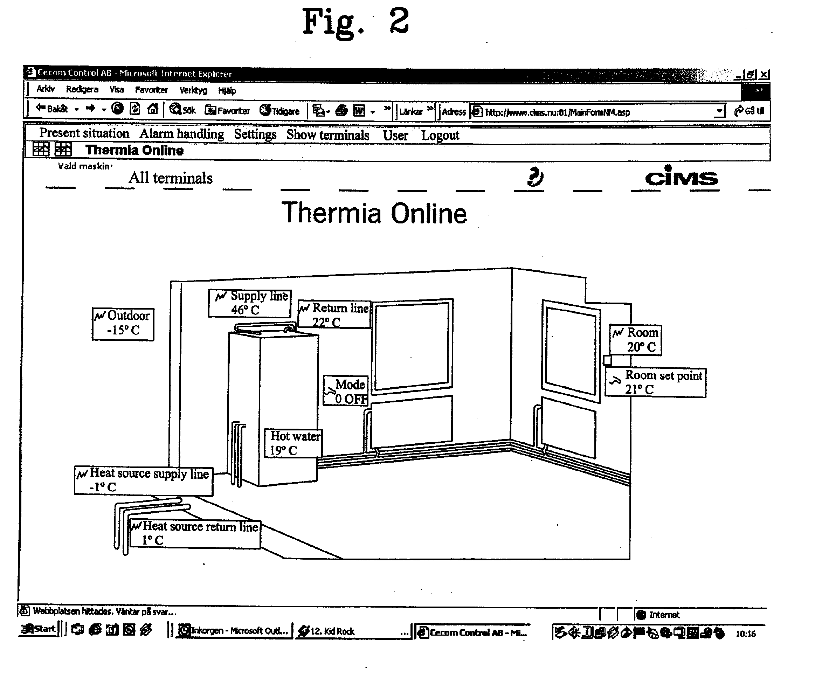

In fig. 2 is shown an alternative way of presenting data to a user. Instead of presenting the information in form of a table, the information in fig.2 is presented graphically. In the figure, an example of what may be shown on a computer screen after login is shown. The figure shows a schematic illustration of a heat pump appliance in a real estate and a number of presentation modes that a user may choose. The shown presentation modes are "present situation", "alarm handling", "settings", "show terminals", "user" and "logout", where "present situation" is chosen. In fig. 2 "present situation" is shown and the picture shows a heat pump and its tubing system and connected radiators. There may also be a possibility for the user to get an electronic heat pump user manual via e.g. a help menu.

Here, the user/owner may see his appliance with the most important temperatures/parameters. Parameters that can be changed have a hand symbol next to it, and when "clicking" on the hand, a dialogue window opens where a new value may be entered. E.g., the room temperature may be changed and the heat pump operating mode may be changed. As is shown in the figure, some temperatures/parameters also have a symbol with a small graph next to it. By clicking on the graph, a history of that parameter is presented graphically on the display.

The illustration shown in fig. 2 may have a number of forms. In fig. 2 is shown a generalised illustration of a heat pump system, but it may also show e.g. a plan (two dimensional or three dimensional) for the specific property the heat pump is installed in, with possibilities to control the temperature in each room individually via the home page. Alternatively, a real picture may be taken of the installed heat pump so that a user may feel "at home". As another alternative a web camera may be provided in the property and which then takes a picture, e.g. once an hour, which is then shown on the web page when a user logs in.

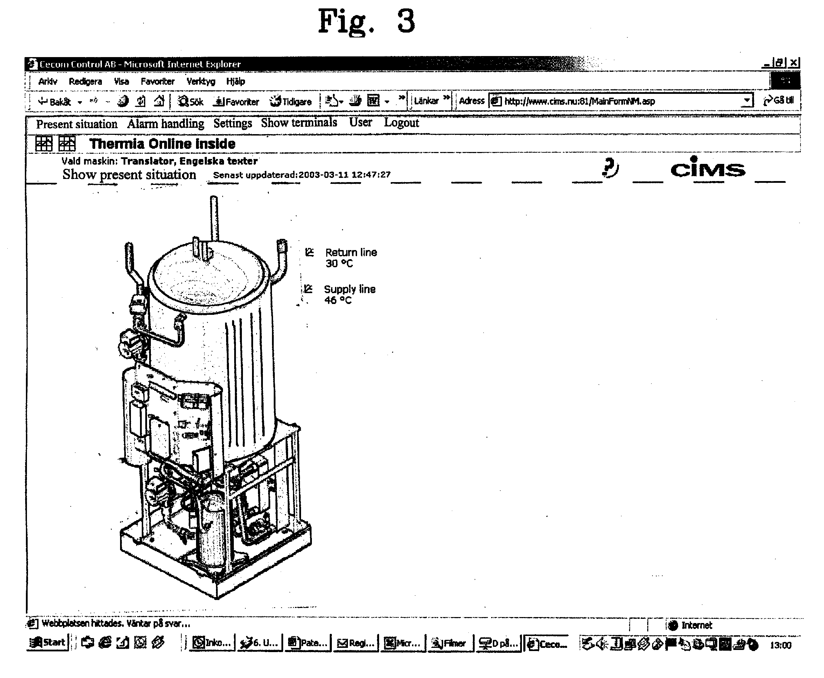

In fig. 3 is shown another level with a more detailed illustration of the heat pump interior. This illustration may be protected by a password so that only maintenance personnel may get access to the illustration and make adjustments of shown parameters. The password protection may also give access to maintenance menus where other system settings may be made.

In the above description, each communication unit 17, 18 is shown as an integrated part of a heat pump, separate from the control computer. It is to be understood, however, that this unit equally well may be integrated in the control computer, or alternatively be designed as a separate unit separate from the heat pump and connectable to the heat pump via a heat pump data outlet. This latter embodiment has the advantage that a customer may choose to buy a heat pump without the functionality allowed by the communication unit, and then later supplement the appliance with a communication unit when need arises. This embodiment further allows that already existing, installed appliance after installation may be supplemented with the new functionality allowed by the combination of the communication unit and the server means.

The heat pump shown in the above example consists of a ground source heat pump. It may, however, of course be constituted by any kind of heat pump, such as a exhaust air heat pump or outdoor air heat pump.

In the above examples the invention has been described in connection with a heat pump. It is to be understood, however, that the present invention may be utilised in any kind of cooling and/or heating system which is controlled and monitored by some kind of control equipment, e.g. oilfired boilers, bioenergy boilers or district heating systems.

The invention has further been described in connection with GPRS. The invention may, however, also be realised by communication via an arbitrary communication system, such as GSM, UMTS, a modem connection or an Ethernet connection when broadband connection possibilities exist.

## Claims

1. System for handling operation status data of at least one cooling and/or heating system, which comprise means for communication via a communications system, the system comprising server means arranged for communication with said cooling and/or heating system via the communication system, and for communicating operation status data of said cooling and/or heating systems with said cooling and/or heating systems, **characterised in that** the system further is arranged such that cooling and/or heating system software may be replaced via the server means.

2. System according to claim 1, **characterised in that** the system is arranged to handle operation status data of a plurality of cooling and/or heating systems.

3. System according to claim 1, **characterised in that** the means for communication consists of a GSM module, a GPRS module, a UMTS module, a modem or an Ethernet module connected to, or integrated in, the cooling and/or heating system.

4. System according to any of the claims 1-3, **characterised in that** the server means comprise means for converting data received from said cooling and/or heating system to a format which is suitable for presentation for a user by means of a general purpose program.

5. System according to any of the claims 1-3, **characterised in that** said cooling and/or heating systems or alternatively the means for communication comprise means for converting data to a format which is suitable for presentation for a user by means of a general purpose program.

6. System according to claim 4 or 5, **characterised in that** the general purpose program is a web browser.

7. System according to any of the claims 4-6, **characterised in that** the system is arranged to authenticate the user prior to presenting data for the user.

8. System according to any of the claims 4-7, **characterised in that** the system is arranged to present data to the user graphically.

9. System according to any of the preceding claims, **characterised in that** the server means is arranged to receive data from said cooling and/or heating systems continuously, at regular intervals, at initiation by the server means or the cooling and/or heating systems, and/or when a property differs from a given interval or is below or exceeds a certain value.

10. System according to any of the preceding claims, **characterised in that** the server means is arranged to transmit data to at least one cooling and/or heating system.

11. System according to claim 10, **characterised in that** the server means is arranged to receive operation status data from a user of at least one cooling and/or heating system, and to communicate these data to the at least one cooling and/or heating systems.

12. System according to any of the claims 1-11, **characterised in that** the operation status data consists of one or more from the group: one or more event logs, temperatures, set points, current consumption, error information, filter status information, heat functions, alarms.

13. System according to any of the claims 1-12, **characterised in that** the cooling and/or heating system consists of an oilfired boiler, a bioenergy boiler, a heat pump such as a ground source heat pump, an exhaust air heat pump or an outdoor air heat pump.

14. Server means, arranged for communication with at least one cooling and/or heating system via a communication system, and for communicating operation status data of said cooling and/or heating systems with the cooling and/or heating systems, **characterised in that** the server means further is arranged to permit replacement of software in the cooling and/or heating system.

15. Method for handling operation status data of at least one cooling and/or heating system, which comprise means for communication via a communications system, the method comprising the step of communicating cooling and/or heating system operation status data between said cooling and/or heating system and server means arranged for communication with said cooling and/or heating systems, **characterised in that** the method further comprises the step of replacing software in the cooling and/or heating system.

16. Method according to claim 15, **characterised in that** the communicated data are used for fault tracing, adjustment and/or monitoring the cooling and/or heating system.

17. System for handling software of at least one cooling and/or heating system, which comprises means for communication via a communications system, the system comprising server means arranged for communication with said cooling and/or heating system via the communication system, **characterised in that** the system is arranged for replacing software in said cooling and/or heating system by communicating the replacement software from the server means to said cooling and/or heating system via the communication system.

18. Server means for handling software of a cooling and/or heating system, the server means being arranged for communication with at least one cooling and/or heating system via a communication system, **characterised in that** the server means further is arranged for communicating cooling and/or heating system software to said cooling and/or heating system via the communication system.
